# EUROPEAN PATENT APPLICATION

(11) **EP 2 620 777 A1**
(43) Date of publication of application: **31.07.2013**
(21) Application number: 11826630.3
(22) Date of filing: 11.07.2011
(51) Int. Cl.: G01N 35/10

(54) **DISPENSING NOZZLE FOR AUTOMATIC ANALYZER, AUTOMATIC ANALYZER EQUIPPED WITH THE NOZZLE, AND METHOD FOR PRODUCING DISPENSING NOZZLE FOR AUTOMATIC ANALYZER**

(30) Priority: 24.09.2010 JP 2010214173
(71) Applicant: Hitachi High-Technologies Corporation, Tokyo 105-8717 (JP)
(72) Inventor: NOJIMA Akihiro, Chiyoda-ku Tokyo 100-8220 (JP); TANIGUCHI Shinichi, Chiyoda-ku Tokyo 100-8220 (JP); ISHIZAWA Hiroaki, Chiyoda-ku Tokyo 100-8220 (JP)
(74) Representative: Strehl Schübel-Hopf & Partner
(86) International application number: PCT/JP2011/065755
(87) International publication number: WO 2012/039184

(57) **Abstract**

In an autoanalyzer for analyzing a specimen such as urine and blood, protecting a measurement value of analysis from influence of a dispensing nozzle repeatedly used. For this purpose, a phosphonic acid derivative or a phosphoric acid derivative is chemically adsorbed on the surface of the dispensing nozzle. In this manner, a molecular layer for suppressing adsorption of biopolymers or adhesion of a specimen per se is formed on the nozzle surface to prevent accuracy of analysis from being influenced.

## Description

### Technical Field

The present invention relates to a dispensing nozzle for an autoanalyzer, an autoanalyzer equipped with the nozzle and a method for producing the dispensing nozzle for an autoanalyzer.

### Background Art

In clinical examinations for medical diagnosis, proteins, sugars, lipids, enzymes, hormones, inorganic ions, disease markers, etc. in biological specimens such as blood and urine are biochemically and immunologically analyzed. In the clinical examinations, it is necessary to treat specimens reliably and speedily with respect to a plurality of test items and therefore most part of analysis is carried out by an autoanalyzer.

As the autoanalyzer, for example, a biochemical analyzer is known, in which a reaction solution, which is prepared by mixing a desired reagent with a specimen such as serum and urine and reacting them, is used as a subject to analysis and absorbance of the subject is measured to biochemically analyze it. The biochemical analyzer of this type is provided with (1) a storage mechanism for storing containers containing a specimen and a reagent and reaction cells into which the specimen and reagent are to be injected, (2) a dispensing mechanism having a dispensing nozzle for automatically injecting the specimen and reagent into the reaction cells, (3) an automatic stirring mechanism having a stirring rod for mixing the specimen and the reagent in a reaction cell, (4) a mechanism for measuring absorbance of a specimen during a reaction or after completion of a reaction and (5) an automatic washing mechanism for suctioning and discharging the reaction solution after completion of the measurement and washing the reaction cell, and the like (for example, Patent Literature 1). Recently, autoanalyzers are required for reducing the amount of specimen and reagent and increasing measurement sensitivity.

Generally, in the autoanalyzer, a large number of specimens and reagents are sequentially dispensed by a same dispensing nozzle. For example, a specimen dispensing nozzle takes a predetermined amount of specimen from a container such as a blood-taking tube containing a specimen and discharges the specimen into a reaction cell for reacting a reagent therewith, and a reagent dispensing nozzle takes a predetermined amount of reagent from a container containing the reagent and discharges the reagent into a specimen reaction cell.

At this time, if components of the dispensed liquid remaining on the surface of the dispensing nozzle are mixed in the next liquid to be dispensed, measurement results may be affected. If such an effect of residual components is reduced and thereby cleanliness of the nozzle surface is increased, the reliability of analysis can be improved for reducing the amount of sample and increasing sensitivity.

As a method for improving cleanliness of a nozzle surface, conventionally, washing with pure water and a detergent containing a surfactant has been performed (Patent Literature 2). However, in such a method, it is sometimes difficult to wash away biopolymers such as proteins in a specimen. Other than the above method, there is a method of deactivating attached residue of a specimen by active oxygen (Patent Literature 3). However, this method cannot be used for a long time since deactivated specimen residue is accumulated on the surface.

Furthermore, a method of using a disposable nozzle (disposable chip) is known. However, the disposable nozzle has problems in that it is difficult to form a microstructure in view of strength and processing accuracy and that use of disposable nozzles produces a large amount of waste, increasing environmental load.

Alternatively, there is a method of coating the surface of a nozzle with a resin having a low surface energy (Patent Literature 4). This method aims to reduce an adhesion amount of dispensed liquid. By virtue of this method, the static contact angle of a nozzle surface can be increased; however, a large static contact angle does not always improve the effect of preventing adhesion of liquid. This is because susceptibility to adhesion of liquid is influenced not only by static contact angle but also by surface roughness (Non Patent Literature 3).

### Citation List

### Patent Literature

Patent Literature 1: JP Patent No. 1706358
Patent Literature 2: JP Patent Publication (Kokai) No. 2007-85930 A
Patent Literature 3: JP Patent No. 3330579
Patent Literature 4: JP Patent Publication (Kokai) No. 2000-329771 A

### Non Patent Literature

Non Patent Literature 1: Chemical Reviews, 96, pp.1533-1554 (1996)
Non Patent Literature 2: Journal of the American Chemical Society, 115, pp.10714-10721 (1993)
Non Patent Literature 3: Thin Solid Films, 351, pp.279-283 (1999)

### Summary of Invention

### Technical Problem

As described above, it is known that components of a specimen, i.e., biopolymers such as proteins, are adsorbed on the surface of a dispensing nozzle. Such adsorption is a problem in improving reliability of analysis.

Then, the present inventors investigated to solve the problem with a view to improving reliability of analysis by applying a surface treatment for suppressing biopolymers such as proteins from adsorbing on the surface of a dispensing nozzle or a surface treatment for suppressing a specimen per se from adhering to the surface of a dispensing nozzle, to the surface of a dispensing nozzle. More specifically, an object of the invention is to provide a dispensing nozzle capable of improving in cleanliness of a surface and reliability of analysis even though a disposable nozzle is not used, a method for producing the dispensing nozzle and an autoanalyzer using the dispensing nozzle.

### Solution to Problem

As a result of intensively studying the aforementioned problem, the present inventors conceived that proteins as specimen components and a specimen per se can be effectively prevented from remaining on a nozzle surface by coating the surface of a dispensing nozzle with a phosphonic acid derivative through chemical adsorption. The chemical structure of a phosphonic acid derivative is represented by the following formula 1.

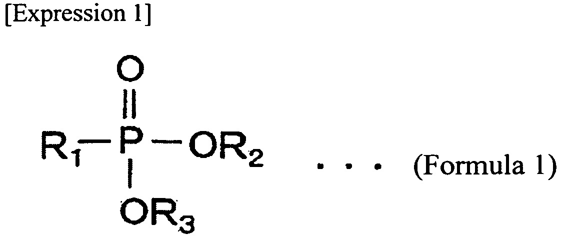

Note that in formula 1, R₁ is a monovalent organic group; and R₂ and R₃ are each an alkyl group or a hydrogen atom.

The chemical adsorption used herein means an adsorption manner on a solid surface due to a chemical bond such as a covalent bond or an ionic bond with an adsorption heat of about 20 to 100 kcal/mol. Note that, physical adsorption uses van der Waals' force with an adsorption heat of usually 10 kcal/mol or less. In this sense, chemical adsorption and physical adsorption are distinguished.

If a surface treatment using physical adsorption is applied to a dispensing nozzle, part of the surface treatment layer is peeled off when the dispensing nozzle is soaked in liquid to be dispensed. Accordingly, when a surface treatment is performed by physical adsorption, the surface treatment layer is eventually completely removed by repeated operations of dispensing.

Then, the present inventors employed chemical adsorption for treating a surface of a dispensing nozzle for an autoanalyzer and successfully formed a surface treatment layer having molecules tightly immobilized onto the surface of the dispensing nozzle. Note that, the present inventors verified that a strong surface treatment layer was successfully formed on a nozzle surface also by chemical adsorption of a phosphoric acid derivative to the surface in the same manner as in chemical adsorption of a phosphonic acid derivative.

### Advantageous Effects of Invention

According to the present invention, adsorption of biopolymers such as proteins as specimen components and a specimen per se to a nozzle surface can be effectively suppressed. Because of this, the cleanliness of the surface of a dispensing nozzle increases, contributing to improvement in analytical reliability of an autoanalyzer. As a result, it is possible to reduce the amounts of specimen and reagent and increase sensitivity of an apparatus and reduce the running cost of an autoanalyzer.

### Brief Description of Drawings

[Figure 1] A schematic view showing a structure of an autoanalyzer.
[Figure 2] A schematic view of a dispensing nozzle.
[Figure 3] A cross-sectional view of a surface treatment portion of a dispensing nozzle.
[Figure 4] A longitudinal-sectional view of a surface treatment portion of a dispensing nozzle.
[Figure 5] A flowchart of a process for treating the surface of a dispensing nozzle.
[Figure 6] A graph showing the results of adsorption suppression effect.
[Figure 7] A flowchart of a process for treating the surface of a dispensing nozzle.
[Figure 8] A graph showing the results of XPS.
[Figure 9] A graph showing the results of XPS.
[Figure 10] A graph showing the results of IRAS.
[Figure 11] A graph showing the results of IRAS.
[Figure 12] A graph showing the results of IRAS.
[Figure 13] A graph showing the analysis results of a protein adsorption suppression effect.
[Figure 14] A schematic view showing a structure of an autoanalyzer having a reformation mechanism of a surface treatment layer.

### Description of Embodiments

The content of the present invention will be more specifically described based on the accompanying drawings; however, the present invention is not limited to the following Examples.

### <Example 1>

### (Structure of analyzer)

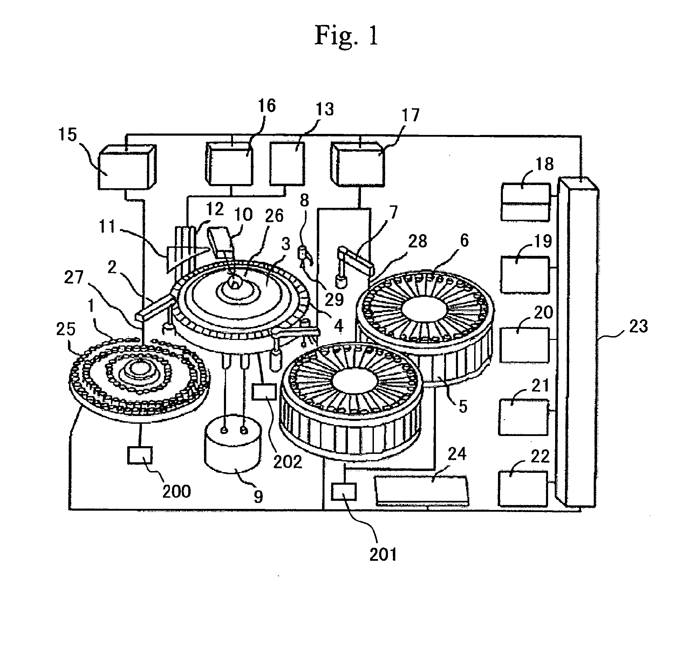

Figure 1 shows a structure of an autoanalyzer according to the present invention. In the autoanalyzer, a specimen storage mechanism 1 is disposed. In the specimen storage mechanism 1, one or more specimen containers 25 are arranged. The specimen storage mechanism 1 shown in Figure 1 is a so-called specimen disk mechanism, in which the specimen containers 25 can detachably installed in a disk-form main body. However, in the specimen storage mechanism 1, other mechanisms such as a specimen rack or a specimen holder that is generally used in an autoanalyzer can be used.

The specimen herein refers to a test solution to be reacted in the reaction container and may be a collected specimen as it is, or a solution of the collected specimen diluted or processed by pretreatment or the like. The specimen in the specimen container 25 is extracted by a specimen dispensing nozzle 27 of a dispensing mechanism for specimen supply 2 and injected into a predetermined reaction container. In this embodiment, the specimen dispensing nozzle 27 is surface-treated with a phosphonic acid derivative. Specific examples of the surface treatment will be described later in Experimental Examples 1, 2, 3, 4, 5, 6, 7 and 8.

In a reagent disk mechanism 5, a large number of reagent containers 6 are detachably arranged. To the reagent disk mechanism 5, a dispensing mechanism for reagent supply 7 is disposed. The reagent is suctioned by a reagent dispensing nozzle 28 of the mechanism and injected into a predetermined reaction cell.

Other than these, in the autoanalyzer, a spectrophotometer 10 and a light source equipped with a light-collecting filter 26 are disposed. Between the spectrophotometer 10 and the light source equipped with the light-collecting filter 26, a reaction disk 3 containing a substance to be measured is disposed. On the outer circumference of the reaction disk 3, for example, 120 reaction cells 4 are arranged. Furthermore, the entire reaction disk 3 is maintained at a predetermined temperature by a constant-temperature vessel 9. Note that, in the vicinity of the reaction disk 3, a stirring mechanism 8 having a stirring rod 29 is disposed.

In the periphery of the reaction disk 3, a reaction cell washing mechanism 11 is disposed. To the reaction cell washing mechanism 11, a washing agent is supplied from a washing agent container 13. The solution within the cell is suctioned by use of a suction nozzle 12.

Furthermore, in the autoanalyzer, a computer 19, an interface 23, a Log converter and an A/D converter 18, a reagent pipette 17, a washing water pump 16 and a specimen pipette 15 are disposed. Moreover, in the autoanalyzer, a printer 20, a CRT 21, a memory apparatus 22 (for example, floppy disk, hardware disk) and an operation panel 24 are disposed.

Note that, the specimen disk mechanism is controlled and driven by a driving section 200, the reagent disk mechanism by a driving section 201, and the reaction disk by a driving section 202 each via the interface. Furthermore, each section of the autoanalyzer is controlled by a computer 19 via the interface.

Note that, in the autoanalyzer having the aforementioned structural constitution, the operator inputs analysis request information by use of an operation panel 24. The analysis request information input by the operator is stored in the memory of the computer 19.

Next, outline of the analysis operation carried out by the autoanalyzer will be described. First, the specimen container 25 containing a specimen to be measured is set up in a predetermined position of the specimen storage mechanism 1. Then, the specimen dispensing nozzle 27 moves down and comes into contact with the specimen to be measured within the specimen container 25. At this time, the capacitance of the specimen dispensing nozzle 27 significantly changes. When the change is detected, the computer 19 sensed that the specimen dispensing nozzle 27 is in contact with the specimen to be measured and terminates move-down of the specimen dispensing nozzle 27.

Subsequently, the computer 19 controls driving of the specimen pipette 15 and the dispensing mechanism for specimen supply 2 in accordance with analysis request information stored in the memory to allow the surface-treated specimen dispensing nozzle 27 to pick up a predetermined amount of specimen each operation.

Thereafter, the specimen dispensing nozzle 27 is moved up to reaction cells and dispenses the specimen to be measured in a predetermined reaction container. After dispensing, surface-treated specimen dispensing nozzle 27 is washed with water and used for a next specimen dispensation.

As described in this embodiment, by using the specimen dispensing nozzle 27 coated with a phosphonic acid derivative, adsorption of biopolymers such as proteins and adhesion of a specimen per se can be suppressed and accuracy of analysis can be improved compared to a conventional dispensing nozzle formed of stainless steel.

Subsequently, to the reaction cell to which the specimen to be measured is dispensed, a reagent dispensing nozzle 28 of the dispensing mechanism for reagent supply 7 is positioned and a predetermined amount of reagent is dispensed. Thereafter, the reagent dispensing nozzle 28 is washed with water and then the reagent is dispensed to a next reaction cell. The solution mixture of the specimen to be measured and the reagent is stirred by the stirring rod 29 of the stirring mechanism 8. The stirring mechanism 8 is sequentially used for stirring the solution mixture of the next reaction cell.

Note that, after the solution is stirred, inspection light emitted from the light source equipped with a light-collecting filter 26 is applied to the reaction cell to measure absorbance and the like by the spectrophotometer 10.

### (Dispensing nozzle)

In the dispensing nozzle of the autoanalyzer, stainless steel has been widely used in view of good processability and corrosion resistance. Accordingly, to apply surface treatment to the dispensing nozzle, a molecule having a desired function may be immobilized to stainless steel. However, it is difficult to immobilize the molecule directly to stainless steel. For example, when the stainless steel is surface-treated with a silane coupling agent, which has been widely used in surface treatment for metals and semiconductors, a reaction takes place not only between the substrate and the silane coupling agent but also between silanole terminal molecules. Because of this, a multilayer film is formed, with the result that a desired function cannot be obtained in some cases.

In contrast, a phosphonic acid derivative can be adsorbed on stainless steel via a chemical bond. In addition, the reaction between the phosphonic acid derivative molecules does not take place to attain stable coating.

Furthermore, in the case of this embodiment, a major element constituting components of the specimen to be measured is serum. To suppress proteins as specimen components from remaining, it is effective to immobilize polyethylene glycol to the nozzle surface.

Accordingly, it is effective to adsorb phosphonic acid having polyethylene glycol at one of the terminals to the nozzle surface. Polyethylene glycol, since it is hydrophilic and nonionic substance, is expected to suppress adsorption of biopolymers such as proteins by its steric repulsion.

To satisfy the requirement of having 2 or more ethylene oxide groups and having sufficient intermolecular interaction for alignment of molecules, the number average molecular weight of a polyethylene glycol derivative is desirably 100 or more and further desirably 200 or more.

In contrast, if intermolecular steric repulsion is excessively large, the adsorption amount of a polyethylene glycol derivative to a nozzle surface reduces. Because of this, the number average molecular weight of a polyethylene glycol derivative is desirably 20000 or less, and more preferably 5000 or less.

The chemical structure of the coating polyethylene glycol derivative needs not to be single and may be plural (mixture). The suppression effect of protein adsorption was verified by measuring the adsorption amount of protein by IRAS (Infra Red Absorption Spectroscopy). To describe more specifically, the adsorption amount of protein in the equine serum was estimated by the peak intensity of amide I. In the substrate surface-treated as mentioned above, the protein adsorption amount is reduced to 1/3 or less of that of conventional stainless steel, and a significant difference with a conventional example was observed.

Furthermore, to suppress specimen per se f rom remaining, it is effective to adsorb a phosphonic acid having a trifluoro group or a methyl group at one of the terminals, on a nozzle surface. If the nozzle is surface-treated with a phosphonic acid having these functional groups at one of the terminals, a trifluoro group or a methyl group is to be exposed on the outermost surface. Owing to this, the surface becomes water repellent. When liquid is dispensed, the liquid is attached to a nozzle side surface; however, it is possible to reduce the adhesion amount of liquid, per se. By virtue of this, reliability of dispensation can be improved.

Now, some specific Experimental Examples performed in view of these will be described below.

### (Structure of nozzle)

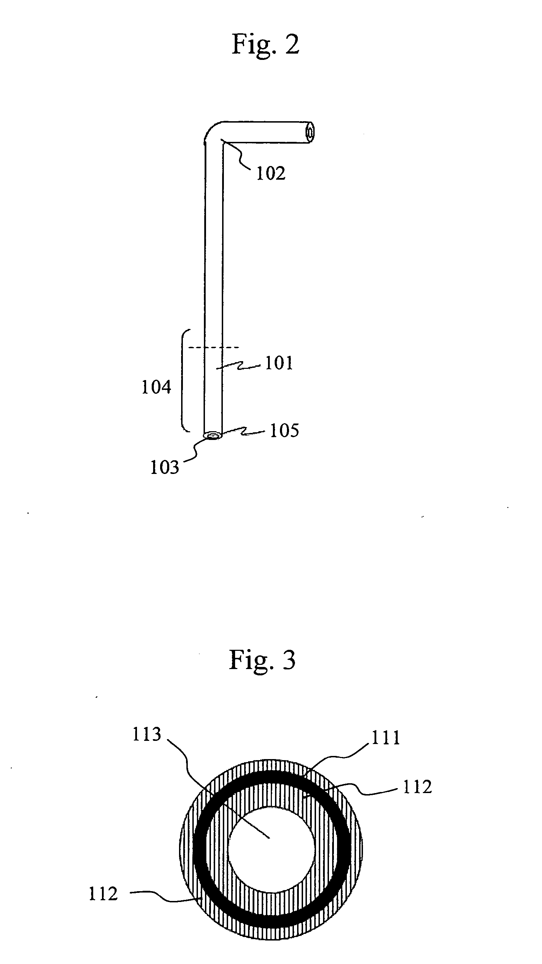

Figure 2 shows a schematic view of the structure of a dispensing nozzle to be used in this embodiment and experiments described below. The dispensing nozzle is tubular and a dispensing nozzle main body is denoted by reference numeral 101. In the dispensing nozzle main body 101, stainless steel is widely used as a material having high corrosion resistance and good processability. In this embodiment, the dispensing nozzle main body 101 is bent at a point 102 and formed into a virtually L-letter shape. In the figure, the end of the body extending in the horizontal direction is connected to a suction mechanism; whereas, the end of the body extending in the vertical direction in the figure remains open and used for suctioning and dispensing of a solution.

A specimen and a reagent are suctioned from the open end to a hollow portion 103 by a predetermined amount. In a dispensing operation, the outer surface of the dispensing nozzle is also soaked in a solution of a specimen and a reagent. Because of this, the region to be coated with a phosphonic acid derivative through chemical adsorption is the end portion 105 and the outer surface. Furthermore, the region to be coated is set to be sufficiently larger than a region 104, which is soaked in a specimen or a reagent when the specimen or reagent is dispensed by the dispensing nozzle. If possible, it is desired to apply coating treatment to the inner surface of the dispensing nozzle main body 101.

Figure 3 shows a cross-sectional view of a surface-treated dispensing nozzle coated with a phosphonic acid derivative and cut along the dotted line (in perpendicular to the shaft direction) in Figure 2. In the figure, reference numeral 111 denotes a dispensing nozzle main body formed of e.g., stainless steel; and reference numeral 112 denotes a layer formed of a phosphonic acid derivative and plays a role of suppressing adsorption of biopolymers such as proteins. In the case of Figure 2, both outer surface and inner surface of the dispensing nozzle main body 111 are coated by a phosphonic acid derivative. Reference numeral 113 denotes the hollow portion of a dispensing nozzle.

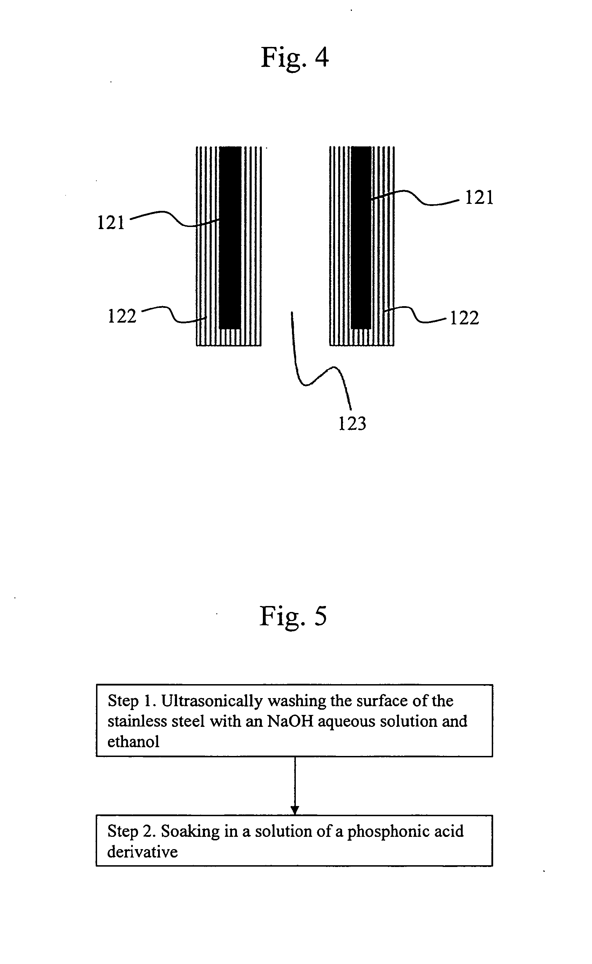

Figure 4 shows a longitudinal-sectional view of the region 104 cut along the shaft direction of the dispensing nozzle. In the figure, reference numeral 121 denotes the dispensing nozzle main body formed of e.g., stainless steel; whereas reference numeral 122 denotes a layer formed of a phosphonic acid derivative and plays a role of suppressing adsorption of biopolymers such as proteins. As shown in the figure, the open end surface of the dispensing nozzle main body 121 is coated by the layer 122. Note that reference numeral 123 denotes the hollow portion of the dispensing nozzle.

Phosphonic acid can be adsorbed on the surface of stainless steel by a solution method as described later. Because of this, as shown in Figure 4, surface treatment can be made up to the open end surface.

Note that, in surface treatment, first of all, the surface of stainless steel is washed with an NaOH aqueous solution and ethanol. Then, the dispensing nozzle main body 121 is soaked in a solution of a phosphonic acid derivative for sufficient time. In this manner, a phosphonic acid derivative can be adsorbed on the surface of the nozzle main body. If the surface treatment method is employed, a phosphonic acid derivative can be adsorbed extremely thin, for example, with a monomolecular thickness. This is because a phosphonic acid derivative is adsorbed on a nozzle surface at a phosphonic acid moiety and after formation of the monomolecular layer is completed, other molecules cannot be chemically adsorbed on the nozzle surface.

Such a phenomenon has been verified by an experiment using XPS (X-ray Photoelectron Spectroscopy), ToF-SIMS (Time of Flight Secondary Ion Mass Spectroscopy) and spectroscopic ellipsometry, and the like. Accordingly, the surface roughness does not change before and after the surface treatment. After the nozzle surface is polished, the nozzle surface polished can be surface-treated with a phosphonic acid derivative to form a treated surface of the nozzle having a small surface roughness. Specifically, the nozzle surface of stainless steel is previously polished and a phosphonic acid derivative having a trifluoro group or a methyl group at one of the terminals is adsorbed on the surface polished. In this manner, a surface having a large static contact angle and a small surface roughness can be formed. By virtue of this, adhesion of liquid can be suppressed. At this time, the surface roughness Ra is desirably 15 nm or less.

Furthermore, in the case where a surface treatment is performed after polishing, since the surface area of a nozzle can be reduced, if a phosphonic acid derivative having polyethylene glycol at one of the terminals is immobilized on the nozzle surface, the adsorption amount of protein as a specimen component can be further suppressed. At this time, the surface roughness Ra is desirably 15 nm or less.

Now, specific Experimental Example of the dispensing nozzle having the structure shown in Figure 2 will be described below. Note that, as described above, in a dispensing nozzle main body of the autoanalyzer, stainless steel is widely used in view of e.g., good processability and corrosion resistance. Then, in this Experimental Example, a SUS304 (stainless steel 304) substrate was used as stainless steel and a surface treatment was performed. Note that, the surface treatment in each Experimental Example was performed at room temperature (about 25°C).

### (Experimental Example 1)

First, to enhance reliability of analysis, effect was verified by use of a planar substrate. The size of the substrate used was 30 mm x 30 mm x 0.5 mm. For verifying the effect, a measurement surface of 30 mm x 30 mm was used.
A flowchart of a surface treatment process is shown in Figure 5.

### Step 1. Washing of stainless steel

A SUS304 substrate was ultrasonically washed with a 0.1% NaOH aqueous solution and ethanol for 15 minutes and washed with water. Thereafter, the SUS304 substrate was dried by nitrogen blowing.

### Step 2. Soaking in a solution of a phosphonic acid derivative

The SUS304 substrate washed in Step 1 is soaked in a solution of a phosphonic acid derivative for 24 hours. Thereafter, the substrate is taken out from the solution, washed with a solvent and then washed with pure water. Thereafter, the SUS304 substrate is dried by nitrogen blowing.

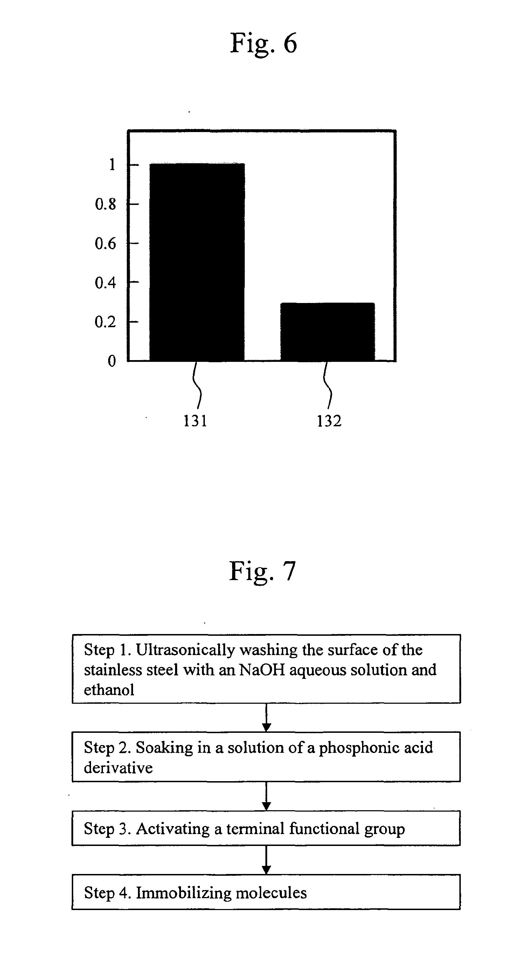

The verification of the effect was carried out by estimating the adsorption amount of protein component in the equine serum by IRAS. As a result, it was verified that the protein remaining on the dispensing nozzle surface after dispensed was reduced to 1/3 of that of a conventional nozzle formed of stainless steel. The results are shown in Figure 6. Reference numeral 131 denotes a conventional example (nozzle formed of stainless steel); whereas, reference numeral 132 denotes Experimental Example 1.

### (Experimental Example 2)

In the case of Experimental Example 1 described above, surface treatment was performed in a single-stage reaction process of adsorbing a phosphonic acid derivative. In this Experimental Example 2, a process for performing a surface treatment in multiple stages will be described.

Figure 7 shows a flowchart of a surface treatment process. The surface treatment process is constituted of roughly two treatment steps. A first one is a step of coating the surface of stainless steel with a phosphonic acid derivative having a reactive functional group at a terminal and the second one is a step of immobilizing a molecule having a desired function to the reactive functional group.

In this Experimental Example, at first, a method of immobilizing a phosphonic acid having a carboxyl group at a terminal to a nozzle surface and then rendering the carboxyl group to be reactive will be described. Note that, as a molecule for suppressing protein adsorption, a polyethylene glycol (PEG) derivative is used.

A specific experimental method will be described below. Similarly to Experimental Example 1, to enhance reliability of analysis, effect was verified by use of a SUS304 substrate. The size of the substrate used was 30 mm x 30 mm x 0.5 mm. For verifying the effect, a measurement surface of 30 mm x 30 mm was used.

The reagents used are as follows. As the phosphonic acid having carboxylic acid at a terminal, 16-phosphono-hexadecanoic acid was used. As a solvent for dissolving this molecule, dehydrated tetrahydrofuran (THF) was used. As a reagent for activating the carboxyl group at a terminal, N-hydroxysuccinimide (NHS) and 1-(3-dimethylaminopropyl)-3-ethylcarbodiinide (EDC) were used. As a reactive group with the carboxyl group activated, an amino group was used. As PEG having an amino group at a terminal, two types of PEGs having an average molecular weight of 2000 and 5000 were used. As a simulated serum, the serum derived from a horse was used. A phosphate buffer solution was prepared from a phosphate buffer powder. PH value of 7.4 was checked by a pH meter.

### Step 1. Washing of stainless steel

A SUS304 substrate was ultrasonically washed with a 0.1% NaOH aqueous solution and ethanol for 15 minutes and washed with water, and then dried by nitrogen blowing.

### Step 2. Soaking in a solution of a phosphonic acid derivative

The SUS304 substrate washed in Step 1 is soaked in a THF solution of 16-phosphono-hexadecanoic acid for 48 hours. Thereafter, the SUS304 substrate is taken out from the solution, washed with THF and then, dried by nitrogen blowing, and further washed with pure water. Thereafter, the SUS304 substrate was again dried by nitrogen blowing. In this manner, a 16-phosphono-hexadecanoic acid molecular film was formed on the SUS304 substrate.

Immobilization was verified by TOF-SIMS (Time of Flight Secondary Ion Mass Spectroscopy), XPS (X-ray Photoelectron Spectroscopy) and IRAS (Infra Red Reflection Absorption Spectroscopy).

ToF-SIMS analysis was performed by use of TOF.SIMS5 (manufactured by ION-TOF GmbH). As a primary ion source, Bi was used and primary ions were irradiated in an irradiation amount of 10⁻¹²/cm² or less in static conditions. The spectrum was measured in the range of m/z = 0 to 1000 with respect to either one of positive and negative ions. The analysis region has a size of 500 µm × 500 µm. The resolution is m/Δm > 7000 (positive ion: PFe₃O₄⁺, negative ion: P₂FeO₅⁻). Calibration was performed by H⁺, C₈H₅O₃⁺ and Fe₄O₄⁺ with respect to positive ion and by H⁻ and C₄H⁻ with respect to negative ion. Error in the calibration is 10 ppm or less.

Measurement of ToF-SIMS was performed with respect to not only a 16-phosphono-hexadecanoic acid molecular film but also an untreated SUS304 substrate as reference. As a result of measurement, as a fragment specific to the molecular film, fragments having compositions of PₐFe_{b}O_{c} and PₐFe_{b}O_{c}H_{d} were observed. Specifically, as positive ions, PFeO₂, PFe₃O₄, PFe₃O₅, PFeₛO₇, PFe₆O₈ were detected; as negative ions, PFeO₃H, PFe₄H, P₂FeOₛ, P₂FeO₆, PFe₂O₅H, P₂FeO₇H, PFe₂O₉, PFe₃O₆, P₂Fe₂O₈H, P₃Fe₃O₁₀, P₂Fe₄O₉, P3Fe₃O₁₁, P₃Fe₄O₁₂, P₃Fe₅O₁₃, P₃Fe₆O₁₄ were detected.

Furthermore, compared to the untreated SUS304 substrate, in the molecular film, a significant increase of peak intensities of CₐFe_{b}O_{c} and CₐFe_{b}O_{c}H_{d} was not observed. If molecules bind to a SUS304 substrate via a carboxyl group, a fragment having compositions of CₐFe_{b}O_{c} and CₐFe_{b}O_{c}H_{d} should be observed. However, not fragments of CₐFe_{b}O_{c} and CₐFe_{b}O_{c}H_{d} but fragments of PₐFe_{b}O_{c} and Pₐfe_{b}O_{c}H_{d} significantly increased. This result demonstrates that the molecules chemically bind to the SUS304 substrate via a phosphonic acid.

Roughly two possibilities are considered as to chemical binding manner between a substrate and phosphonic acid. One is an ionic bond between oxygen of P-O and a metal atom of the substrate and the other is a hydrogen bond between a hydroxyl group of P-O-H and surface oxygen of the SUS304 substrate. In the case of a chemical binding via a weak bond such as a hydrogen bond, the possibility of detecting fragments having compositions of PₐFe_{b}O_{c} and PₐFe_{b}O_{c}H_{d} without being further fragmented is low. Accordingly, the chemical binding between phosphonic acid and the SUS304 surface is due to an ionic bond formed between oxygen of P-O and a metal atom of the substrate.

For XPS analysis, QuanteraSXM (manufactured by ULVAC-PHI Incorporated) was used. As an X-ray source, monochromatic Al (1486.6 eV) was used. The size of detection region is 100 µmϕ and the takeoff angle of photoelectron is 45 degrees. First, element analysis was performed by wide-scan. Measurement conditions are the binding energy range: 0 to 1350 eV and the pass energy: 280 eV. Furthermore, to analyze an adsorption structure and electron state more specifically, narrow-scan was performed with respect to P2p. Measurement conditions were the binding energy range: 0 to 1350 eV and the pass energy: 112 eV. The binding energy of the P2p narrow-scan was corrected by setting peak energy derived from C-C/C-H of C1s at 284.8 eV.

XPS measurement was performed with respect to not only 16-phosphono-hexadecanoic acid molecular film but also an untreated SUS304 substrate and 16-phosphono-hexadecanoic acid powder as reference.

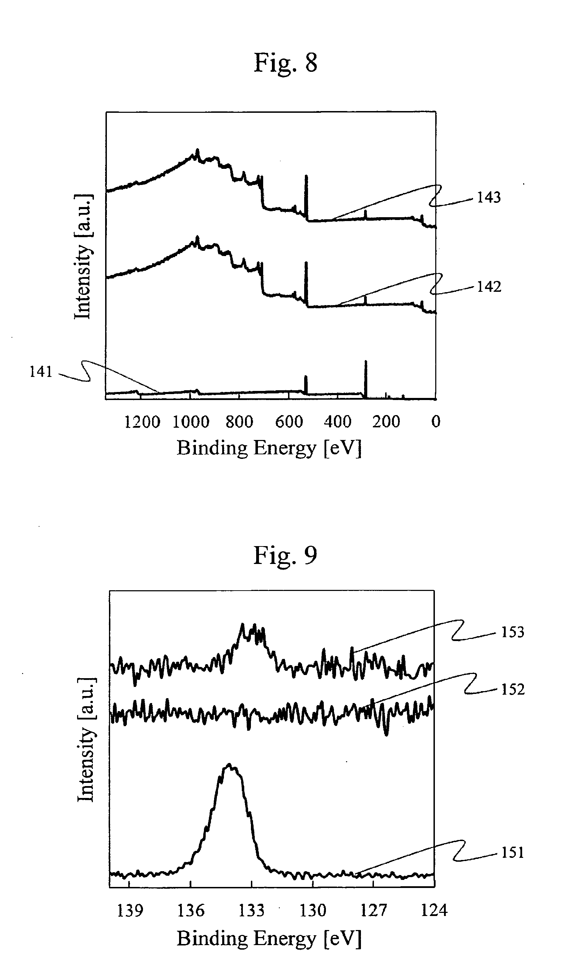

Figure 8 shows the results of XPS wide-scan. Reference numeral 141 denotes XPS wide-scan measurement result of 16-phosphono-hexadecanoic acid; reference numeral 142 denotes XPS wide-scan measurement result of the SUS304 substrate; and reference numeral 143 denotes XPS wide-scan measurement result of 16-phosphono-hexadecanoic acid molecular film. As shown in Figure 8, in the 16-phosphono-hexadecanoic acid powder, C, O and P were detected. The composition ratio thereof is 74.9%, 20.5%, 4.7% and agrees well with the component element ratio of 72.7%, 22.7%, 4.5%. In the SUS304 substrate, C, O, Fe, Cr, Ni and Si were detected. The respective ratio was 19.7%, 46.9%, 27.1%, 4.1%, 0.5% and 1.6%.

In the 16-phosphono-hexadecanoic acid molecular film, P was detected in addition to C, O, Fe, Cr and Ni detected in the SUS304 substrate. The respective ratio was 42.7%, 34.8%, 15.6%, 4.5%, 1.0% and 1.4%. P newly detected is P of phosphonic acid and demonstrates formation of the 16-phosphono-hexadecanoic acid molecular film. In the molecular film, Si was not detected although it was detected as a contaminant in the substrate. The composition ratio (C/P) of carbon and phosphorus was 15.9 in powder. This agrees well with a C/P value of 16.2, obtained from a molecular structure. However, in the molecular film, a C/P value is 30.5, which is a larger value than that of the powder. This is considered because C contained in the SUS304 substrate was detected.

Next, Figure 9 shows analysis results of the narrow-scan of P2p by XPS. Reference numeral 151 denotes the measurement result of XPS narrow-scan of P2p of 16-phosphono-hexadecanoic acid; reference numeral 152 denotes the measurement result of XPS narrow-scan of P2p of the SUS304 substrate; and reference numeral 153 denotes the measurement result of XPS narrow-scan of P2p of the 16-phosphono-hexadecanoic acid molecular film.

As shown in Figure 9, the P2p peak of 16-phosphono-hexadecanoic acid is attributed to a free phosphonic acid not chemically bound. In contrast, in the molecular film, a binding energy shifts toward a lower energy side by about 1 eV and indicates 133.0 eV. The significant shift of the binding energy suggests a change in chemical circumstances around P. In the Experimental Example, the energy shift in the molecular film is considered as formation of a chemical bond between phosphonic acid and the SUS304 surface.

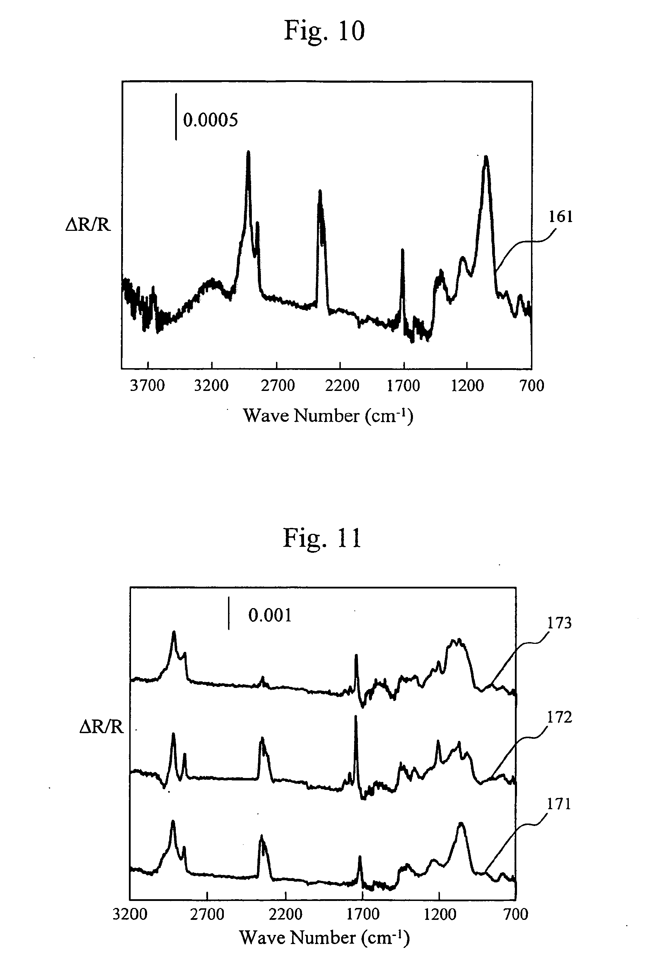

In IRAS measurement, a Fourier transform infrared spectrophotometer (Nicolet Nexus 470) was used. Measurement conditions were a resolution of 4 cm⁻¹ and cumulated number of 512 or 1024. The spectrum of a reference substrate to which washing was only applied was used as a background. Figure 10 shows measurement results. In the Figure, reference numeral 161 denotes IRAS measurement results of the 16-phosphono-hexadecanoic acid molecular film.

First, peaks at 2930 cm⁻¹ and 2850 cm⁻¹ are respectively attributed to CH₂ asymmetric stretching and symmetric stretching of an alkyl chain in the 16-phosphono-hexadecanoic acid molecular film. In the case where the orderliness of the alkyl chain is not sufficient, more specifically, in the non-ordered structure where the gauche conformation is in the alkyl chain, the peak wavelength of CH₂ asymmetric stretching appears in the vicinity of 2924 cm⁻¹ (the peak position of CH₂ asymmetric stretching in liquid alkane). In contrast, in the case where all take conformation of trans-configuration, a peak appears in the vicinity of 2918 to 2914 cm⁻¹ (the peak position of CH₂ asymmetric stretching of solid crystal alkane). In the case of the 16-phosphono-hexadecanoic acid molecular film, since a peak was observed at 2930 cm⁻¹, it is considered that the film takes a non-ordered structure in which a gauche conformation is present in an alkyl chain.

Next, in the wavelength range of 1800 to 1350 cm-¹, a C = O stretching vibration peak of carboxylic acid binding to hydrogen was observed at 1721 cm⁻¹, CH₂ deformation vibration peak at 1466 cm⁻¹, a C = O stretching vibration peak of carboxylic acid ion at 1415 cm⁻¹, respectively.

In the wavelength range of 1300 to 800 cm⁻¹, a peak attributed to stretching vibration of PO within phosphonic acid appears. The peaks at 1030 cm⁻¹ and 1234 cm⁻¹ are attributed to P-O and P = O stretching vibrations, respectively. From the above, it was verified that 16-phosphono-hexadecanoic acid molecules bind to the SUS304 substrate.

### Step 3. Activation of terminal functional group

To activate carboxylic acid, a 0.4M NHS aqueous solution and a 0.1M EDC aqueous solution were mixed in a ratio of 1:1. In the solution, a 16-phosphono-hexadecanoic acid molecular film was soaked and allowed to stand still for 45 minutes. The substrate was taken out and washed with water and then dried by nitrogen blowing.

In this manner, carboxylic acid is changed into an activated ester (NHS ester) group. The substrate is taken out and washed with water and then dried by nitrogen blowing. NHS ester was verified by observing the following peak by IRAS. The results are shown in Figure 11. Reference numeral 171 denotes the IRAS measurement result of the 16-phosphono-hexadecanoic acid molecular film; reference numeral 172 denotes the IRAS measurement results of esterified molecular film with NHS; and reference numeral 173 denotes the IRAS measurement result (narrow-scan) of a surface having a polyethylene glycol derivative immobilized thereon. Individual peaks are attributed to those shown below. 1042 cm⁻¹: P-O stretching, 1077 cm⁻¹: N-C-O stretching, 1211 cm⁻¹: P = O stretching, 1364 cm⁻¹: C-N-C stretching, 1437 cm⁻¹: CH₂ deformation, 1743 cm⁻¹: C = O asymmetric stretching, 1791 cm⁻¹: C = O symmetric stretching, 1822 cm⁻¹: C = O stretching, 2857 cm⁻¹, 2930 cm⁻¹: CH₂ stretching.

### Step 4. Immobilization of molecules

The activated ester group introduced in Step 4 can react with an amino group to form an amide bond. In this Experimental Example, as a molecule having an amino group at a terminal and suppressing adsorption of a protein, three substances, i.e., ethanol amine (hereinafter referred to as "EA"); PEG (number average molecular weight: 2000, hereinafter referred to as "PEG2000") with an amino terminal; and PEG (average molecular weight: 5000, hereinafter referred to as "PEG5000") with an amino terminal were investigated. The reaction conditions were as follows.

First, a substrate was soaked in a 1 M EA aqueous solution for 10 minutes. Thereafter, the substrate was taken out, washed with water and then dried by nitrogen blowing.

Next, the substrate was soaked in a 1 mM phosphate buffer solution of PEG with an amino terminal (pH = 7.4) for 3 hours. The substrate was taken out and then, washed with phosphate buffer solution (pH = 7.4), and then washed with water and dried by nitrogen blowing.

Formation of a film was verified based on the following peaks measured by IRAS. Figure 11 shows an example of an IRAS spectra obtained when PEG2000 was immobilized.
In the case of the surface on which EA was immobilized, the following peaks were observed. 1030 cm⁻¹: P-O stretching, 1559 cm⁻¹: amide II, 1650 cm⁻¹: amide I, 2854 cm⁻¹, 2930 cm⁻¹: CH₂ stretching.

In the case of the surface on which PEG2000 was immobilized, the following peaks were observed. 1046 cm⁻¹: P-O stretching, 1074 cm⁻¹: N-C-O stretching, 1110 cm⁻¹: C-O stretching, 1208 cm⁻¹: P = O stretching, 1240 cm⁻¹: C-N-C stretching, 1278 cm⁻¹: CH₂ deformation (PEG), 1466 cm⁻¹: CH₂ deformation, 1533 cm⁻¹: amide II, 1644 cm⁻¹: amide I, 1743 cm⁻¹: C = O asymmetric stretching, 1784 cm⁻¹: C = O symmetric stretching, 1820 cm⁻¹:C = O stretching, 2850 cm⁻¹, 2921 cm⁻¹: CH₂ stretching.

In the case of the surface on which PEG5000 was immobilized, the following peaks were observed. 1023 cm⁻¹: P-O stretching, 1074 cm⁻¹: N-C-O stretching, 1110 cm⁻¹: 1208 cm⁻¹: P = O stretching, 1240 cm⁻¹: C-N-C stretching, 1275 cm⁻¹: CH₂ deformation (PEG), 1463 cm⁻¹: CH₂ deformation, 1549 cm⁻¹: amide II, 1638 cm⁻¹: amide I, 1743 cm⁻¹: C = O asymmetric stretching, 1784 cm⁻¹: C = O symmetric stretching, 1816 cm⁻¹: C = O stretching, 2854 cm⁻¹, 2927 cm⁻¹: CH₂ stretching.

The amide I peak herein is a peak attributed to C = O mainly contained in an amide bond. Amide II peak is attributed to stretching vibration of C-N and deformation vibration of N-H mainly contained in an amide bond.

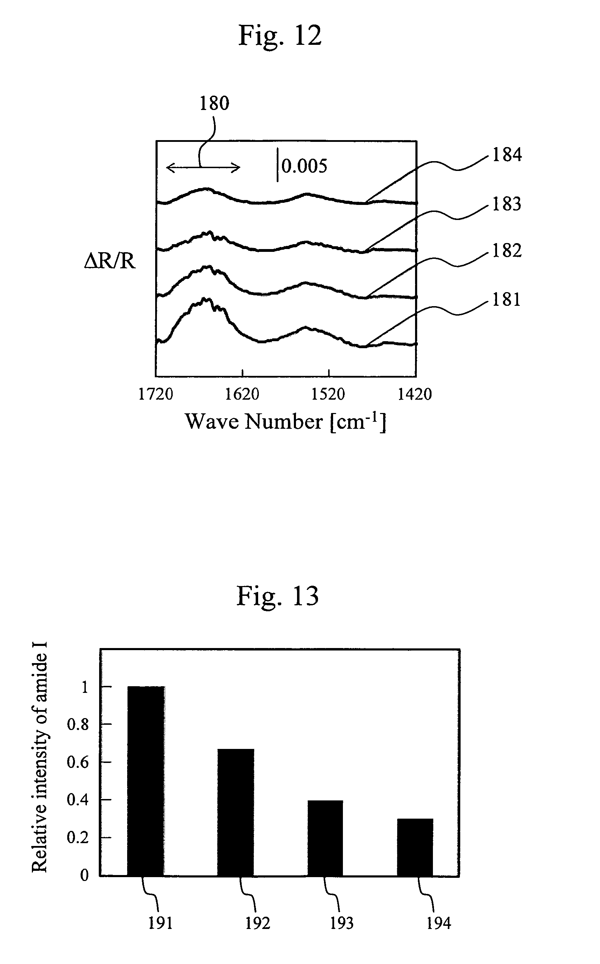

The measurement results, i.e., IRAS spectra are shown in Figure 12. The peak intensities of amide I derived from respective proteins are shown in bar charts of Figure 13. In Figure 12, reference numeral 180 denotes the measurement result of an amide I region; reference numeral 181 denotes the measurement result of the SUS304 substrate; reference numeral 182 denotes the measurement result of EA; reference numeral 183 denotes the measurement result of PEG2000; and reference numeral 184 denotes the measurement result of PEG5000. From Figure 13, it is found that untreated SUS304 substrate 191 shows the highest adsorption amount of protein. The molecular film (192) on which EA is immobilized has an adsorption amount of about 2/3 relative to that of the untreated SUS304 substrate. The molecular film on which PEG is immobilized shows a further higher protein adsorption suppression effect than the surface on which EA is immobilized. The adsorption amount of this film is successfully reduced to 2/3 or less of EA. With respect to dependency of PEG upon molecular weight, PEG5000 (194) shows a further higher adsorption suppression effect than PEG 2000 (193). The absorption amount was 1/3 or less of that of untreated SUS304. From this, it is found that the molecular weight of polyethylene glycol is desirably 2000 or more.

In the case where a surface treatment is applied to the form of a nozzle, a treatment solution is allowed to enter the interior portion. Owing to this manner, not only the outer surface but also inner surface and end portions can be treated.

### (Experimental Example 3)

Also in this Experimental Example, the case where the same treatment as in Experimental Examples 1 and 2 describe above is applied to a dispensing nozzle will be explained. First, to the surface of a stainless-steel dispensing nozzle, a phosphonic acid derivative layer was formed on a nozzle surface in the same manner as in Experimental Examples 1 and 2. As the regions to be treated, the end portion 105 and the region 104 of the dispensing nozzle (shown in Figure 2) to be soaked in a specimen were specified. First, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave.

Next, after completion of the washing treatment, a phosphonic acid derivative having a polyethylene glycol derivative was immobilized to the end side of the dispensing nozzle to be soaked in a specimen. The immobilization method was the same as in Experimental Examples 1 and 2.

Effect was verified by estimating the adsorption amount of a protein component in the equine serum by IRAS in the same manner as in Experimental Examples 1 and 2. As a result, it was verified that the protein remaining on the dispensing nozzle surface after dispensing was reduced to 1/3 or less of that of a conventional stainless-steel nozzle.

### (Experimental Example 4)

Also in this Experimental Example, the case where the same treatment as in Experimental Examples 1 and 2 is applied to a dispensing nozzle will be explained. After the surface was polished, a phosphonic acid derivative layer was formed on the surface of a stainless-steel dispensing nozzle, in the same manner as in Experimental Examples 1 and 2. As the regions to be treated, the end portion 105 and the region 104 of the dispensing nozzle (shown in Figure 2) to be soaked in a specimen were specified. First, the nozzle surface was polished. At this time, the final Ra was set at 15 nm.

Next, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave. After completion of washing treatment, the dispensing nozzle was soaked in a THF solution of a phosphonic acid derivative. Herein, the end side of the dispensing nozzle to be soaked in a specimen was soaked in the THF solution of a phosphonic acid derivative having a polyethylene glycol derivative for 24 hours and thereafter washed with THF and then washed with pure water. Thereafter, the dispensing nozzle was dried by nitrogen blowing.

Effect was verified by estimating the adsorption amount of a protein component in the equine serum by IRAS in the same manner as in Experimental Examples 1 and 2. As a result, it was verified that the protein remaining on the dispensing nozzle surface after dispensing was reduced to 1/10 or less of that of a conventional stainless-steel nozzle.

### (Experimental Example 5)

Also in this Experimental Example, the case where the same treatment as in Experimental Examples 1 and 2 is applied to a dispensing nozzle will be explained. To the surface of a stainless-steel dispensing nozzle, a phosphonic acid derivative layer was formed in the same manner as in Experimental Examples 1 and 2. As the regions to be treated, the end portion 105 and the region 104 of the dispensing nozzle (shown in Figure 2) to be soaked in a specimen were specified. First, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave. After completion of the washing treatment, the dispensing nozzle was soaked in a THF solution of a phosphonic acid derivative. Herein, the end side of the dispensing nozzle to be soaked in a specimen was soaked in the THF solution of an alkyl phosphonic acid derivative for 24 hours and thereafter washed with THF and then washed With pure water. Thereafter, the dispensing nozzle was dried by nitrogen blowing.

Effect was verified based on comparison of amount of specimen attached to the nozzle surface when the nozzle was pulled up from a specimen. As a result, it was verified that the protein remaining on the dispensing nozzle surface after dispensing was reduced to 1/3 or less of that of a conventional stainless-steel nozzle.

### (Experimental Example 6)

Also in this Experimental Example, the case where the same treatment as in Experimental Examples 1 and 2 is applied to a dispensing nozzle will be explained. After the surface was polished, a phosphonic acid derivative layer was formed on the surface of a stainless-steel dispensing nozzle in the same manner as in Experimental Examples 1 and 2. As the regions to be treated, the end portion 105 and the region 104 of the dispensing nozzle (shown in Figure 2) to be soaked in a specimen were specified. First, the nozzle surface was polished. At this time, the final Ra was set at 15 nm. Next, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave. After completion of the washing treatment, the dispensing nozzle was soaked in a THF solution of a phosphonic acid derivative. Herein, the end side of the dispensing nozzle to be soaked in a specimen was soaked in the THF solution of phosphonic acid having an alkyl phosphonic acid derivative for 24 hours and thereafter washed with THF and then washed with pure water. Thereafter, the dispensing nozzle was dried by nitrogen blowing.

Effect was verified based on comparison of amount of specimen attached to the nozzle surface when the nozzle was pulled up from the specimen. As a result, no specimen was attached to the dispensing nozzle surface after pulled up.

### (Experimental Example 7)

Also in this Experimental Example, the case where the same treatment as in Experimental Examples 1 and 2 is applied to a dispensing nozzle will be explained. To the surface of a stainless-steel dispensing nozzle, a phosphonic acid derivative layer was formed in the same manner as in Experimental Examples 1 and 2. As the regions to be treated, the end portion 105 and the region 104 of the dispensing nozzle (shown in Figure 2) to be soaked in a specimen were specified. First, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave. After completion of washing treatment, the dispensing nozzle was soaked in an ethanol solution of a phosphonic acid derivative. Herein, the end side of the dispensing nozzle to be soaked in a specimen was soaked in an ethanol solution of an alkyl phosphonic acid derivative having a trifluoro group at one of the terminals, for 24 hours and thereafter washed with ethanol and then washed with pure water. Thereafter, a dispensing nozzle was dried by nitrogen blowing.

Effect was verified based on comparison of amount of specimen attached to the nozzle surface when the nozzle was pulled up from the specimen. As a result, it was verified that the protein remaining on the dispensing nozzle surface after dispensed was reduced compared to a conventional stainless-steel nozzle.

### (Experimental Example 8)

Also in this Experimental Example, the case where the same treatment as in Experimental Examples 1 and 2 is applied to a dispensing nozzle will be explained. After the surface was polished, a phosphonic acid derivative layer was formed on the surface of a stainless-steel dispensing nozzle in the same manner as in Experimental Examples 1 and 2. As the regions to be treated, the end portion 105 and the region 104 of the dispensing nozzle (shown in Figure 2) to be soaked in a specimen were specified. First, the nozzle surface was polished. At this time, the final Ra was set at 15 nm. Next, the nozzle surface was ultrasonically washed with a 0.1% NaOH aqueous solution and ethanol. At this time, a support was provided such that the nozzle was not to be in contact with the container and adjacent nozzles to avoid being damaged by ultrasonic wave. After completion of washing treatment, the dispensing nozzle was soaked in an ethanol solution of a phosphonic acid derivative. Herein, the end side of the dispensing nozzle to be soaked in a specimen was soaked in an ethanol solution of an alkyl phosphonic acid derivative having a trifluoro group at one of the terminals for 24 hours, and thereafter washed with THF and then washed with pure water. Thereafter, a dispensing nozzle was dried by nitrogen blowing.

Effect was verified based on comparison of amount of specimen attached to the nozzle surface when the nozzle was pulled up from the specimen. As a result, no specimen was attached to the dispensing nozzle surface after pulled up.

### <Example 2>

In the case of Example 1, the phosphonic acid derivative chemically adsorbed on the nozzle surface sometimes peels off, by mechanical impact on a nozzle surface, for example by bumping to something. However, in the case of the dispensing nozzle produced by the aforementioned surface treatment method, a phosphonic acid derivative can be chemically adsorbed on the dispensing nozzle in a simple manner. Then, in this Example, an autoanalyzer in which a mechanism of chemically adsorbing a phosphonic acid derivative is installed will be described.

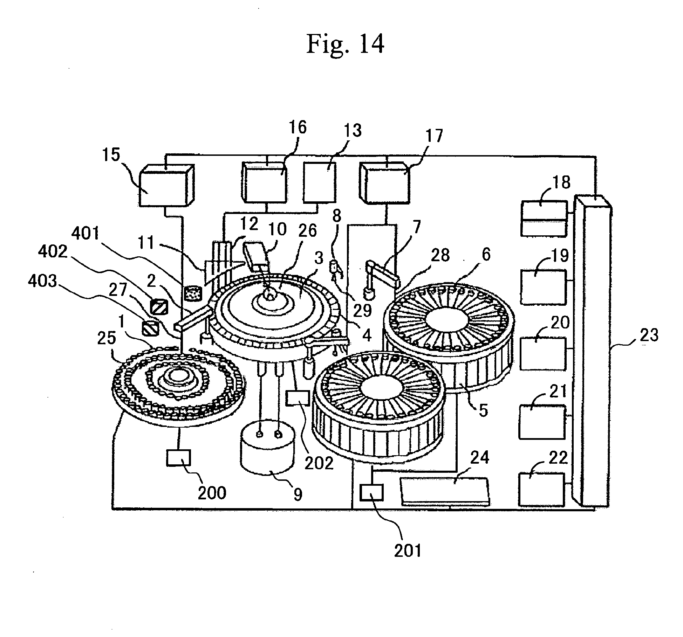

Figure 14 shows a schematic view of another autoanalyzer used in this Example. In Figure 14, the portions corresponding to those in Figure 1 are designated by like reference numerals. The fundamental structure of the autoanalyzer according to this Example is the same as that of the autoanalyzer shown in Figure 1 and differs in that a first treatment liquid vessel 401 and a second treatment liquid vessel 402 and a dispensing nozzle washing vessel 403 are provided within the movable range of the specimen dispensing nozzle 27. Now, function and operation in connection with specific structures of this Example 2 will be described.

First, the specimen dispensing nozzle 27 is rotationally moved to the position of the first treatment liquid vessel 401. Thereafter, the specimen dispensing nozzle 27 is moved down and soaked in a first treatment liquid. At this time, the region of the specimen dispensing nozzle 27 soaked is set sufficiently larger than the region to be soaked in a specimen at the time of dispensing. As the first treatment liquid, a THF solution of a phosphonic acid derivative is used. The time for soaking varies depending upon the frequency of soaking. For example, if the specimen dispensing nozzle 27 is soaked every time it is used for dispensing, about one-second soaking time is sufficient. In contrast, if the specimen dispensing nozzle 27 is soaked after analysis for the day is completed, the soaking time is set at about 24 hours. Next, the specimen dispensing nozzle 27 is rotatory moved to the position of the second treatment liquid vessel 402. Thereafter, the specimen dispensing nozzle 27 is moved down and soaked in a second treatment liquid. At this time, the region of the specimen dispensing nozzle 27 soaked is set sufficiently larger than the region soaked in the first treatment liquid. As the solution to be used in the second treatment liquid vessel 402, THF is used, which is used as a solvent of the treatment liquid for the first treatment liquid vessel 401.

By the above operation in the second treatment liquid vessel 402, the phosphonic acid derivative excessively attached to the nozzle when it is treated in the first treatment liquid vessel 401 can be removed. Thereafter, the dispensing nozzle was washed in the dispensing nozzle washing vessel 403 and dried by nitrogen blowing. At this time, coating of a phosphonic acid is reformed on the surface of the dispensing nozzle.

By dispensing a specimen by using the dispensing nozzle thus treated, accuracy of analysis can be improved while suppressing adsorption of biopolymers such as proteins and adhesion of a specimen per se.

### Reference Signs List

1 ... Specimen storage mechanism, 2 ... Dispensing mechanism for specimen supply, 3 ... Reaction disk, 4 ... Reaction cell, 5 ... Reagent disk mechanism, 6 ... Reagent container, 7 ... Dispensing mechanism for reagent supply, 8 ... Stirring mechanism, 9 ... Constant-temperature vessel, 10 ... Spectrophotometer, 11 ... Reaction cell washing mechanism, 12 ... Suction nozzle, 13 ... Washing agent container, 15 ... Specimen pipette, 16 ... Washing water pump, 17 ... Reagent pipette, 25 ... Specimen container, 26 ... Light source equipped with a light-collecting filter, 27 ... Specimen dispensing nozzle, 28 ... Reagent dispensing nozzle, 29 ... Stirring rod, 101 ... Dispensing nozzle main body, 102 ... Dispensing nozzle bending portion, 103 ... Dispensing nozzle hollow portion, 111 ... Dispensing nozzle main body, 112 ... Phosphonic acid derivative layer, 113 ... Hollow portion of a dispensing nozzle, 121 ... Dispensing nozzle main body, 122 ... Phosphonic acid derivative layer, 123 ... Hollow portion of a dispensing nozzle, 131 ... The result of stainless steel, 132 ... The result of the case where a phosphonic acid derivative is immobilized, 141 ... XPS wide-scan measurement result of 16-phosphono-hexadecanoic acid, 142 ... XPS wide-scan measurement result of SUS304 substrate, 143 ... XPS wide-scan measurement result of 16-phosphono-hexadecanoic acid molecular film, 151 ... XPS narrow-scan measurement result of P2p of 16-phosphono-hexadecanoic acid, 152 ... XPS narrow-scan measurement result of P2p of SUS304 substrate, 153 ... XPS narrow-scan measurement result of P2p of 16-phosphono-hexadecanoic acid molecular film, 161 ... IRAS measurement result of 16-phosphono-hexadecanoic acid molecular film, 171 ... IRAS measurement result of 16-phosphono-hexadecanoic acid molecular film, 172 ... IRAS measurement result of esterified molecular film with NHS, 173 ... IRAS measurement result (narrow-scan) of a surface having a polyethylene glycol derivative immobilized thereon, 180 ... Measurement result of an amide I region, 181 ... Measurement result of SUS304 substrate, 182 ... measurement result of EA, 183 ... Measurement result of PEG2000, 184 ... Measurement result of PEG 5000, 191 ... Measurement result of SUS304 substrate, 192 ... Measurement result of EA, 193 ... Measurement result of PEG2000, 194 ... Measurement result of PEG 5000, 200 ... Driving section, 201 ... Driving section, 202 ... Driving section, 401 ... First treatment liquid vessel, 402 ... Second treatment liquid vessel, 403 ... Dispensing nozzle washing vessel

## Claims

1. An autoanalyzer comprising
a plurality of specimen containers each containing a specimen,
a plurality of reagent containers each containing a reagent,
a plurality of reaction cells into which the specimen and the reagent are to be injected,
a specimen dispensing mechanism which injects the specimen in the specimen container into the reaction cell, and
a reagent dispensing mechanism which injects the reagent in the reagent container into the reaction cell,
wherein the specimen dispensing mechanism has a dispensing nozzle on the surface of which a phosphonic acid derivative is chemically adsorbed.

2. The autoanalyzer according to Claim 1, wherein the material of a main body of the dispensing nozzle is stainless steel.

3. The autoanalyzer according to Claim 1, wherein the phosphonic acid derivative chemically adsorbed on the surface of the dispensing nozzle has polyethylene glycol at a terminal.

4. The autoanalyzer according to Claim 1, wherein the phosphonic acid derivative chemically adsorbed on the surface of the dispensing nozzle has a trifluoro group or a methyl group at a terminal.

5. The autoanalyzer according to Claim 1, wherein the surface of a dispensing nozzle has a roughness Ra of 15 nm or less.

6. The autoanalyzer according to Claim 1, comprising a mechanism which applies surface treatment to the dispensing nozzle for chemically adsorbing the phosphonic acid derivative on the dispensing nozzle.

7. A dispensing nozzle for the autoanalyzer having a phosphonic acid derivative chemically adsorbed on the surface of a nozzle substrate.

8. A method for producing a dispensing nozzle for an autoanalyzer used for injecting a specimen in a specimen container into a reaction cell, comprising the steps of
ultrasonically washing the surface of the dispensing nozzle for an autoanalyzer with an NaOH aqueous solution and ethanol, and
soaking at least one end side of the dispensing nozzle for an autoanalyzer in a solution of a phosphonic acid derivative.

9. A method for producing a dispensing nozzle for an autoanalyzer used for injecting a specimen in a specimen container into a reaction cell, comprising the steps of
washing a main body surface of the dispensing nozzle for an autoanalyzer,
soaking the main body surface washed in a solution of a phosphonic acid derivative to coat the main body surface with the phosphonic acid derivative,
activating a terminal functional group of the phosphonic acid derivative used for coating, and
immobilizing a molecule to the activated terminal functional group of the phosphonic acid derivative.

10. The method for producing a dispensing nozzle for an autoanalyzer according to Claim 9, wherein the terminal functional group of the phosphonic acid derivative to be activated is carboxylic acid, which is activated into an active ester.

11. The method for producing a dispensing nozzle for an autoanalyzer according to Claim 9 or Claim 10, wherein the immobilized molecule has an amino group.

12. An autoanalyzer comprising
a plurality of specimen containers each containing a specimen,
a plurality of reagent containers each containing a reagent,
a plurality of reaction cells into which the specimen and the reagent are to be injected, a specimen dispensing mechanism which injects the specimen in the specimen container into the reaction cell and
a reagent dispensing mechanism which injects the reagent in the reagent container into the reaction cell,
wherein the specimen dispensing mechanism has a dispensing nozzle on the surface of which a phosphoric acid derivative is chemically adsorbed.
